# FASCICULE DE BREVET EUROPEEN

(11) **EP 4 291 440 B1**
(45) Date de publication et mention de la délivrance du brevet: **10.06.2026**
(21) Numéro de dépôt: 22703665.4
(22) Date de dépôt: 04.02.2022
(51) Int. Cl.: B60L 53/22, B60K 5/12

(54) **AGENCEMENT COMPRENANT UN CHARGEUR, UN BLOC MOTEUR, DES LONGERONS ET UN DISPOSITIF DE FIXATION**
ANORDNUNG MIT EINEM LADEGERÄT, EINEM MOTORBLOCK, LÄNGSTRÄGERN UND EINER BEFESTIGUNGSVORRICHTUNG
ARRANGEMENT COMPRISING A CHARGER, AN ENGINE BLOCK, SIDE RAILS AND A FIXING DEVICE

(30) Priorité: 15.02.2021 FR 2101428
(43) Date de publication de la demande: 20.12.2023
(73) Titulaire: Ampere SAS, 92100 Boulogne-Billancourt (FR)
(72) Inventeur: CHAFFANJON, Jean-Marc, 78640 VILLIERS-SAINT-FREDERIC (FR); OLLIVIER, Mathieu, 78640 VILLIERS-SAINT-FREDERIC (FR)
(74) Mandataire: Renault Group
(86) Numéro de dépôt international: PCT/EP2022/052784
(87) Numéro de publication internationale: WO 2022/171544

(56) Documents cités:
- EP-A1- 3 616 953
- US-A1- 2012 031 689
- US-A1- 2020 207 222

## Description

### Domaine technique

La présente invention concerne la fixation d'un chargeur électrique par rapport à des longerons latéraux d'un véhicule automobile à traction électrique ou hybride.

La présente invention vise à constituer un dispositif de fixation particulièrement compact qui peut être adapté facilement entre plusieurs modèles de véhicule, ayant des variations de dimensions et de poids du bloc moteur et du chargeur et des variations de distance entre les longerons latéraux.

### Techniques antérieures

On connaît des systèmes de fixation qui permettent de supporter un chargeur électrique de véhicule sous son capot moteur, au-dessus du moteur et entre les longerons latéraux du véhicule.

Par soucis d'équilibrage de la masse du véhicule, et afin de faciliter le montage du chargeur et sa maintenance, il est essentiel que l'architecture sous le capot moteur permette de maintenir le chargeur électrique entre les longerons et au-dessus du bloc moteur.

Il est connu d'autre part de pallier ce problème de positionnement du chargeur par l'adjonction d'une poutre portant le bloc moteur et supportant le chargeur, cette poutre rejoignant les deux longerons en passant au-dessus du bloc moteur, et sous le chargeur.

Cette solution à pièce monolithique est néanmoins insatisfaisante car la poutre est encombrante et inamovible alors qu'elle est positionnée en région centrale sous le capot moteur, ce qui oblige à la contourner dans de nombreux cas d'usage sous le capot, notamment à l'égard du bloc moteur, par exemple pour le montage ou la maintenance. Les poutres existantes sont en outre pesantes, alors qu'il est important de rechercher un allègement du véhicule. Par ailleurs, la poutre doit être développée spécifiquement non seulement pour chaque architecture de véhicule, dès lors que les gammes déclinent plusieurs écartements de longerons, mais aussi pour chaque chargeur et chaque bloc moteur, ce qui en fait une pièce onéreuse.

Surtout, la réalisation monolithique de la poutre rend difficile l'adjonction d'éléments d'amortissement mécaniques au dispositif pour absorber les vibrations en des endroits spécifiques, dès lors que la poutre doit être conçue au préalable avec des emplacements prédéterminés pour l'accueil de tels éléments.

US 2020/207222 A1 divulgue un dispositif de fixation d'un chargeur électrique de véhicule électrique ou hybride et d'un bloc moteur dudit véhicule, comportant des moyens de fixation positionnés entre ledit chargeur électrique et ledit bloc moteur.

### Exposé de l'invention

L'invention a pour but de pallier au moins certains des inconvénients précités et de proposer un dispositif de fixation du chargeur et du bloc moteur qui s'affranchit des moyens de fixation connus à structure monolithique encombrante entre les longerons du véhicule, notamment à poutre.

Au vu de ce qui précède, l'invention a pour objet un dispositif de fixation d'un chargeur électrique de véhicule électrique ou hybride et d'un bloc moteur dudit véhicule, comportant des moyens de fixation positionnés entre ledit chargeur électrique et ledit bloc moteur, le chargeur électrique faisant partie intégrante desdits moyens de fixation, lesdits moyens de fixation comportant d'une part deux supports supérieurs aptes à être fixés respectivement sur l'un et l'autre de deux longerons latéraux opposés du véhicule et adaptés pour maintenir horizontalement en position ledit chargeur électrique par rapport aux deux longerons latéraux opposés et d'autre part deux supports inférieurs adaptés pour porter le bloc moteur par rapport au chargeur électrique.

De préférence, l'un des supports inférieurs est en contact avec l'un des supports supérieurs selon une interface de contact inclinée d'un angle de trente à soixante degrés par rapport à un plan horizontal.

Par exemple, l'un des supports supérieurs est apte à être lié à un des longerons via un élément d'amortissement mécanique.

Avantageusement, l'un des supports inférieurs est apte à être lié au bloc moteur via un élément d'amortissement mécanique.

Selon une forme de réalisation, l'un des supports supérieurs est lié au chargeur via un élément d'amortissement mécanique.

Dans un mode de réalisation, l'un des supports inférieurs est lié au chargeur via un élément d'amortissement mécanique.

Avantageusement, l'un des supports supérieurs est en appui contre un des supports inférieurs via un élément d'amortissement mécanique.

Le dispositif peut prévoir en outre qu'un des supports inférieurs soit apte à être fixé sur le bloc moteur à un emplacement sur ledit bloc moteur situé en sous le chargeur électrique.

De préférence, le chargeur électrique est plus haut qu'au moins l'un des deux longerons.

L'invention concerne également un dispositif dans lequel l'interface est située sur une extension du support inférieur, ladite extension s'étendant vers le longeron sans être sous le chargeur électrique.

L'invention a également pour objet un chargeur électrique pour véhicule automobile à traction électrique ou hybride, caractérisé en ce qu'il comporte un dispositif de fixation tel que défini ci-dessus pour la fixation du chargeur et du bloc moteur du véhicule sur des longerons du véhicule.
1. L'invention a encore pour objet un agencement, du type comprenant un bloc moteur de véhicule automobile, des longerons, et un chargeur pour la recharge du bloc moteur électrique, caractérisé en ce qu'il comporte un dispositif de fixation tel que défini ci-dessus pour la fixation du chargeur et du bloc moteur du véhicule sur des longerons du véhicule.

### Brève description des dessins

L'invention sera mieux comprise à l'étude détaillée de quelques modes de réalisation pris à titre d'exemples non limitatifs et illustrés par les dessins annexés, sur lesquels :
[Fig 1] représente une vue de l'architecture sous capot moteur d'un véhicule comportant un dispositif de fixation à poutre selon l'art antérieur.
[Fig 2] représente une vue de face du dispositif de la Figure 1.
[Fig 3] représente une vue de face d'un premier mode de réalisation du dispositif de fixation selon l'invention.
[Fig 4] représente une vue de face d'un deuxième mode de réalisation du dispositif de fixation.
[Fig 5] représente un troisième mode de réalisation du dispositif de fixation.
[Fig 6] représente un quatrième mode de réalisation du dispositif de fixation.
[Fig 7] représente un cinquième mode de réalisation du dispositif de fixation.

### Description détaillée

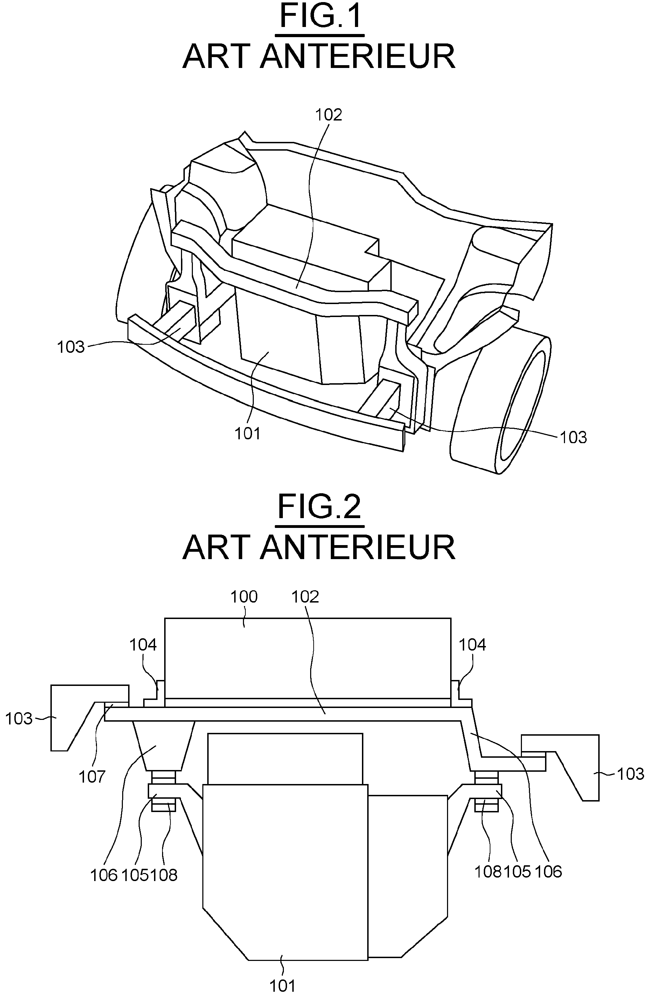

La Figure 1 illustre un dispositif de fixation d'un chargeur (non représenté) et d'un bloc moteur 101 selon l'art antérieur, qui comprend un moyen de fixation s'étendant en un bloc entre deux longerons 103 du véhicule, tel qu'une poutre 102 dans le mode de réalisation illustré. La poutre 102 est destinée à passer entre le chargeur et le bloc moteur 101, de manière à supporter le chargeur et à porter le bloc moteur 101.

Cette poutre 102, qui n'a pas d'autre utilité que de servir de moyen de fixation du bloc moteur 101 et du chargeur, fait obstacle à l'accès au bloc moteur 101.

La Figure 2 représente une vue de face de ce même dispositif selon l'art antérieur. Un chargeur 100 est disposé sur la poutre 102 et maintenu en position sur celle-ci par deux équerres 104.

Le bloc moteur 101 comporte généralement deux bras latéraux 105 qui permettent l'accroche dudit bloc moteur 101 sous la poutre 102, laquelle comporte en outre des extensions 106 pour le déport vers le bas de la poutre 102 jusqu'aux bras latéraux 105.

La poutre 106 doit donc être réalisée sur mesure selon les dimensions du bloc moteur 101 et selon l'écartement des longerons 103.

La poutre 102 rejoint les longerons 103 via des éléments d'amortissement mécanique 107. Des éléments d'amortissement mécanique 108 peuvent aussi être positionnés entre les extensions 106 et les bras 105. Ainsi, une fois la poutre 102 conçue et dimensionnée pour un modèle de véhicule, il n'est plus possible de moduler la présence des éléments d'amortissement 107, 108 qui deviennent obligatoires, et dont les positions sont déterminées sur la poutre 102.

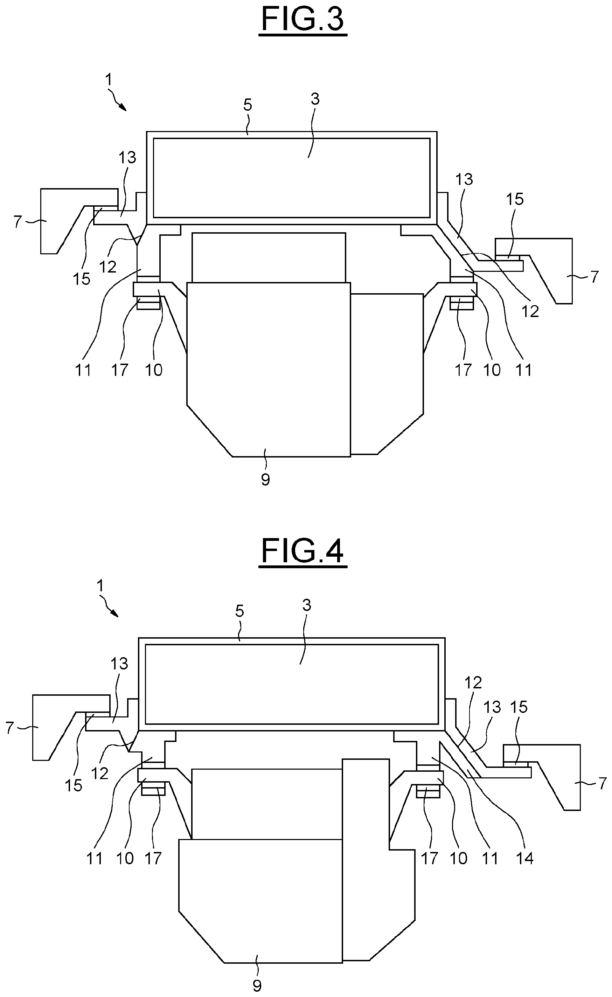

Au vu de ce qui précède, l'invention a pour objet un dispositif de fixation 1 tel qu'illustré par le premier mode de réalisation de la Figure 3, pour la fixation d'un chargeur électrique 3 de véhicule automobile à traction électrique ou hybride et d'un bloc moteur 9 dudit véhicule.

Le dispositif de fixation 1 comporte des moyens de fixation positionnés entre ledit chargeur électrique 3 et ledit bloc moteur 9.

Contrairement à l'art antérieur, le chargeur électrique 3 fait partie intégrante des moyens de fixation.

Le chargeur 3 est donc un élément structurant du dispositif 1, qui permet la fixation du bloc moteur 9.

Les moyens de fixation comportent d'une part deux supports supérieurs 13 fixés respectivement sur l'un et l'autre des deux longerons latéraux opposés 7 du véhicule et adaptés pour maintenir horizontalement en position le chargeur électrique 3 par rapport aux deux longerons latéraux opposés 7 et d'autre part deux supports distincts 11 adaptés pour porter ledit bloc moteur 9 par rapport au chargeur électrique 3.

Il est donc nécessaire de dimensionner un chargeur 3 qui soit suffisamment rigide pour porter le moteur 9, dès lors que le chargeur 3 reprend, avec les autres moyens de fixation, les efforts qui sont supportés par la poutre 102 dans les solutions connues de l'art antérieur.

On peut prévoir par exemple une coque rigide 5 entourant le chargeur 3 pour renforcer sa résistance mécanique par rapport aux chargeurs conventionnels qui offrent une rigidité moindre.

Les moyens de fixation permettent ainsi le maintien du bloc moteur 9 entre les longerons 7, tout en permettant un accès direct au bloc moteur 9 en cas de retrait du chargeur 3.

Une grande modularité dans la possibilité d'adaptation du dispositif 1 à différentes dimensions et configurations de moteurs et à différents écartements de longerons 7 est ainsi obtenue, grâce aux nombreuses combinaisons possibles des moyens de fixation. Les supports inférieurs 11 et supérieurs 13 sont en effet des pièces d'ajustement particulièrement simples à concevoir et à produire de par leurs dimensions réduites par rapport à la poutre 102.

De préférence, l'un des supports inférieurs 11 est en contact avec un des supports supérieurs 13 selon une interface de contact inclinée 12 d'un angle de trente à soixante degrés par rapport à un plan horizontal.

Une telle configuration permet les reprises d'efforts entre les supports inférieurs 11 et supérieurs 13, notamment lors de vibrations du bloc moteur 9, par un renvoi angulaire des efforts en vibration vers les longerons 7.

Comme illustré sur la figure 4, selon un deuxième mode de réalisation, l'un des supports supérieurs 13 peut être lié à un des longerons 7 via un élément d'amortissement mécanique 15. Il est possible de moduler la résistance mécanique de cet élément d'amortissement 15 en fonction du modèle de véhicule, plus particulièrement des longerons 7 et du bloc moteur 9. On obtient ainsi une possibilité de gammification de ces éléments d'amortissement, pour produire par exemple des véhicules haut de gamme ayant des éléments d'amortissement plus gros et/ou plus nombreux, et des véhicules d'entrée de gamme à objectif de réduction des coûts de production pour lesquels la fonction d'amortissement est moindre.

Pour les mêmes raisons, l'un des supports inférieurs 11 peut être lié au bloc moteur 9 via un élément d'amortissement mécanique 17.

Le dispositif 1 peut prévoir en outre qu'un des supports inférieurs 11 soit fixé sur le bloc moteur 9 à un emplacement sur ledit bloc moteur 9 situé directement en dessous du chargeur électrique 3, à la verticale de celui-ci, de manière à augmenter la compacité du dispositif 1.

Le bloc moteur 9 comporte parfois un bras 10 pour la fixation de moyens de fixation, tels que la poutre 102, ou pour le montage du dispositif de fixation décrit précédemment positionné entre le chargeur et le bloc moteur. Ces bras sont courts sur certains blocs moteurs 9.

Ainsi, l'interface 12 peut être située sur une extension 14 du support inférieur 11, ladite extension 14 s'étendant vers le longeron 7 sans être sous le chargeur électrique 3. Une telle extension 14 permet de positionner la fixation d'un support inférieur 11 sur une version courte de bras 10 du bloc moteur 9, tout en fournissant une élasticité apportant un effet d'amortissement mécanique supplémentaire d'un support inférieur 11 par rapport à un support supérieur 13.

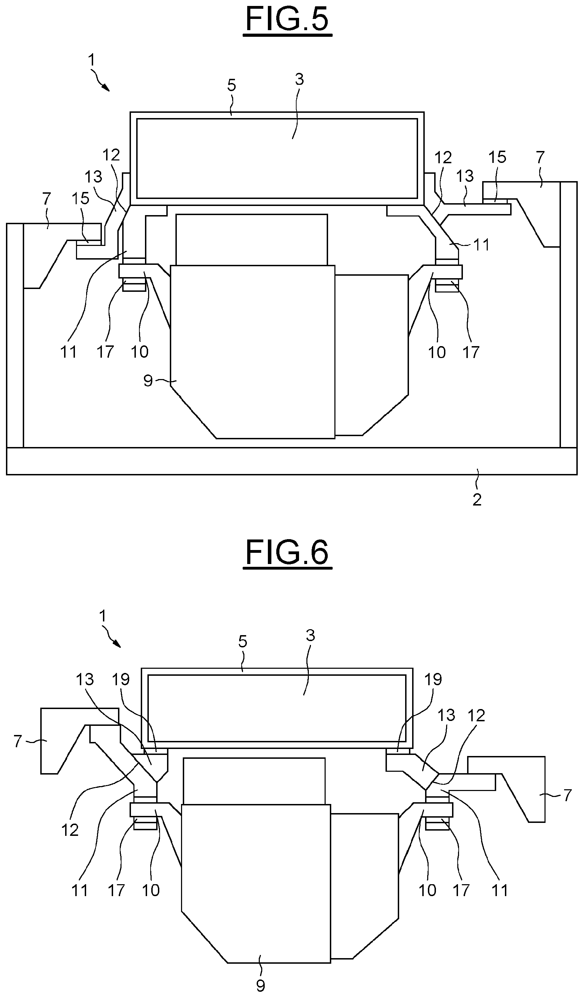

Comme illustré par la Figure 5 qui montre un troisième mode de réalisation du dispositif 1, le chargeur électrique 3 peut être positionné plus haut qu'au moins l'un des deux longerons 7, ce qui permet le support par les moyens de fixation d'un bloc moteur 9 ayant une hauteur importante, au-dessus du châssis 2 du véhicule.

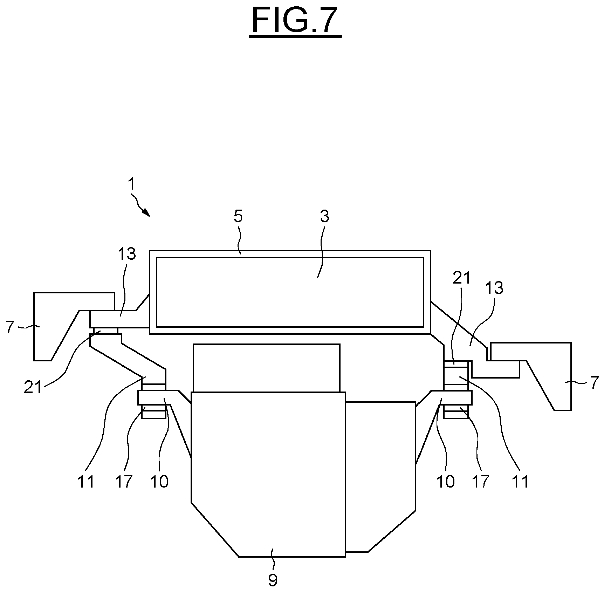

Selon une quatrième forme de réalisation illustrée par la Figure 6, l'un des supports supérieurs 13 est lié au chargeur 3 via un élément d'amortissement mécanique 19. Cet élément d'amortissement 19 est également modulable en position et en dimension grâce à la modularité de conception des moyens de fixation, contrairement à la solution à poutre structurelle de l'art antérieur. Comme illustré à la Figure 7 qui représente un quatrième mode de réalisation, l'un des supports supérieurs 13 peut être en appui contre un des supports inférieurs 11 via un élément d'amortissement mécanique 21, ce qui apporte une qualité d'amortissement des vibrations grandement accrue.

Dans tous les modes de réalisation, l'un des supports inférieurs 11 peut en outre être lié au chargeur 3 via un élément d'amortissement mécanique.

On obtient ainsi un dispositif 1 dégageant l'espace moteur et disposant de moyens de fixation facilement adaptables à une grande plage de dimensions de blocs moteurs 9 et d'écartement de longerons 7. Les supports 11 et 13 sont de plus intégrables au chargeur 3.

Ce dispositif 1, qui intègre une reprise des efforts de support du bloc moteur 9 par le chargeur 3, peut donc être transposé sur de nombreux modèles de véhicule, et permet de s'affranchir des poutres structurelles habituelles qui sont spécifiques en plus d'être encombrantes et lourdes pour peu d'utilité.

## Revendications

1. Dispositif (1) de fixation d'un chargeur électrique (3) de véhicule électrique ou hybride et d'un bloc moteur (9) dudit véhicule, comportant des moyens de fixation destinés à être positionnés entre ledit chargeur électrique (3) et ledit bloc moteur (9), **caractérisé en ce que** le chargeur électrique (3) fait partie intégrante desdits moyens de fixation, et **en ce que** lesdits moyens de fixation comportent d'une part deux supports supérieurs (13) aptes à être fixés respectivement sur l'un et l'autre de deux longerons latéraux opposés (7) du véhicule et adaptés pour maintenir horizontalement en position le chargeur électrique (3) par rapport aux deux longerons latéraux opposés (7) et d'autre part deux supports inférieurs (11) adaptés pour porter le bloc moteur (9) par rapport au chargeur électrique (3).

2. Dispositif (1) selon la revendication 1, dans lequel l'un des supports inférieurs (11) est en contact avec un des supports supérieurs (13) selon une interface de contact inclinée (12) d'un angle de trente à soixante degrés par rapport à un plan horizontal.

3. Dispositif (1) selon l'une quelconque des revendications 1 et 2, dans lequel l'un des supports supérieurs (13) est apte à être lié à un des longerons (17) via un élément d'amortissement mécanique (15).

4. Dispositif (1) selon l'une quelconque des revendications précédentes, dans lequel l'un des supports inférieurs (11) est apte à être lié au bloc moteur (17) via un élément d'amortissement mécanique (17).

5. Dispositif (1) selon l'une quelconque des revendications précédentes, dans lequel l'un des supports supérieurs (13) est lié au chargeur (3) via un élément d'amortissement mécanique (19).

6. Dispositif (1) selon l'une quelconque des revendications précédentes, dans lequel l'un des supports inférieurs (11) est lié au chargeur (3) via un élément d'amortissement mécanique.

7. Dispositif (1) selon l'une quelconque des revendications précédentes, dans lequel l'un des supports supérieurs (13) est en appui contre un des supports inférieurs (11) via un élément d'amortissement mécanique (21).

8. Dispositif (1) selon l'une quelconque des revendications précédentes, dans lequel l'un des supports inférieurs (11) est apte à être fixé sur le bloc moteur (9) à un emplacement sur ledit bloc moteur (9) situé sous le chargeur électrique (3).

9. Dispositif (1) selon l'une quelconque des revendications précédentes, dans lequel le chargeur électrique (3) est plus haut qu'au moins l'un des deux longerons (7).

10. Dispositif (1) selon les revendications 2 et 9, dans lequel l'interface (12) est située sur une extension (14) du support inférieur (11), ladite extension (14) s'étendant vers le longeron (7) sans être sous le chargeur électrique (3).

11. Chargeur électrique pour véhicule automobile à traction électrique ou hybride, **caractérisé en ce qu'**il comporte un dispositif de fixation selon l'une quelconque des revendications 1 à 10 pour la fixation du chargeur et du bloc moteur du véhicule sur des longerons du véhicule.

12. Agencement, comprenant un bloc moteur de véhicule automobile, des longerons, et un chargeur pour la recharge du bloc moteur électrique, **caractérisé en ce qu'**il comporte un dispositif de fixation selon l'une quelconque des revendications 1 à 10 pour la fixation du chargeur et du bloc moteur du véhicule sur des longerons du véhicule

## Patentansprüche

1. Vorrichtung (1) zur Befestigung eines elektrischen Ladegeräts (3) für ein Elektro- oder Hybridfahrzeug und eines Motorblocks (9) des Fahrzeugs mit Befestigungsmitteln, die dazu bestimmt sind, zwischen dem elektrischen Ladegerät (3) und dem Motorblock (9) positioniert zu werden, **dadurch gekennzeichnet, dass** das elektrische Ladegerät (3) integraler Bestandteil der Befestigungsmittel ist und dass die Befestigungsmittel einerseits zwei obere Halterungen (13) aufweisen, die jeweils an einem der beiden gegenüberliegenden seitlichen Längsträger (7) des Fahrzeugs befestigt werden können und dazu ausgelegt sind, das elektrische Ladegerät (3) in horizontaler Position relativ zu den beiden gegenüberliegenden seitlichen Längsträgern (7) zu halten, und andererseits zwei untere Halterungen (11) aufweisen, die dazu ausgelegt sind, den Motorblock (9) in Bezug auf das elektrische Ladegerät (3) zu tragen.

2. Vorrichtung (1) nach Anspruch 1, wobei eine der unteren Halterungen (11) mit einer der oberen Halterungen (13) über eine Kontaktfläche (12) in Kontakt steht, die gegenüber einer horizontalen Ebene um einen Winkel von dreißig bis sechzig Grad geneigt ist.

3. Vorrichtung (1) nach einem der Ansprüche 1 und 2, wobei eine der oberen Halterungen (13) über ein mechanisches Dämpfungselement (15) mit einem der Längsträger (17) verbunden werden kann.

4. Vorrichtung (1) nach einem der vorhergehenden Ansprüche, wobei eine der unteren Halterungen (11) über ein mechanisches Dämpfungselement (17) mit dem Motorblock (17) verbunden werden kann.

5. Vorrichtung (1) nach einem der vorhergehenden Ansprüche, wobei eine der oberen Halterungen (13) über ein mechanisches Dämpfungselement (19) mit dem Ladegerät (3) verbunden ist.

6. Vorrichtung (1) nach einem der vorhergehenden Ansprüche, wobei eine der unteren Halterungen (11) über ein mechanisches Dämpfungselement mit dem Ladegerät (3) verbunden ist.

7. Vorrichtung (1) nach einem der vorhergehenden Ansprüche, wobei eine der oberen Halterungen (13) über ein mechanisches Dämpfungselement (21) an einer der unteren Halterungen (11) anliegt.

8. Vorrichtung (1) nach einem der vorhergehenden Ansprüche, wobei eine der unteren Halterungen (11) am Motorblock (9) an einer Stelle des Motorblocks (9) befestigt werden kann, die sich unterhalb des elektrischen Ladegeräts (3) befindet.

9. Vorrichtung (1) nach einem der vorhergehenden Ansprüche, wobei das elektrische Ladegerät (3) höher ist als mindestens einer der beiden Längsträger (7).

10. Vorrichtung (1) nach den Ansprüchen 2 und 9, wobei sich die Verbindungsstelle (12) an einer Verlängerung (14) der unteren Halterung (11) befindet, wobei sich die Verlängerung (14) in Richtung des Längsträgers (7) erstreckt, ohne sich unterhalb des elektrischen Ladegeräts (3) zu befinden.

11. Elektrisches Ladegerät für ein Elektro- oder Hybridfahrzeug, **dadurch gekennzeichnet, dass** es eine Befestigungsvorrichtung nach einem der Ansprüche 1 bis 10 zur Befestigung des Ladegeräts und des Motorblocks des Fahrzeugs an den Längsträgern des Fahrzeugs aufweist.

12. Anordnung, bestehend aus einen Kraftfahrzeugmotorblock, Längsträgern und einem Ladegerät zum Aufladen des Elektromotorblocks, **dadurch gekennzeichnet, dass** es eine Befestigungsvorrichtung nach einem der Ansprüche 1 bis 10 zur Befestigung des Ladegeräts und des Motorblocks des Fahrzeugs an den Längsträgern des Fahrzeugs aufweist.

## Claims

1. Device (1) for attaching an electric charger (3) of an electric or hybrid vehicle and a motor unit (9) of said vehicle, comprising attachment means intended to be positioned between said electric charger (3) and said motor unit (9), **characterized in that** the electric charger (3) forms an integral part of said attachment means, and **in that** said attachment means comprise, on the one hand, two upper supports (13) adapted to be secured respectively to each of two opposite side rails (7) of the vehicle and adapted to hold the electric charger (3) horizontally in position with respect to the two opposite side rails (7) and, on the other hand, two lower supports (11) adapted to carry the motor unit (9) relative to the electric charger (3).

2. Device (1) according to Claim 1, wherein one of the lower supports (11) is in contact with one of the upper supports (13) along a contact interface inclined (12) at an angle of thirty to sixty degrees with respect to a horizontal plane.

3. Device (1) according to either of Claims 1 and 2, wherein one of the upper supports (13) is adapted to be connected to one of the rails (17) via a mechanical damping element (15).

4. Device (1) according to any one of the preceding claims, wherein one of the lower supports (11) is adapted to be connected to the motor unit (17) via a mechanical damping element (17).

5. Device (1) according to any one of the preceding claims, wherein one of the upper supports (13) is connected to the charger (3) via a mechanical damping element (19).

6. Device (1) according to any one of the preceding claims, wherein one of the lower supports (11) is connected to the charger (3) via a mechanical damping element.

7. Device (1) according to any one of the preceding claims, wherein one of the upper supports (13) bears against one of the lower supports (11) via a mechanical damping element (21).

8. Device (1) according to any one of the preceding claims, wherein one of the lower supports (11) is adapted to be attached to the motor unit (9) at a location on said motor unit (9) located under the electric charger (3).

9. Device (1) according to any one of the preceding claims, wherein the electric charger (3) is higher than at least one of the two rails (7).

10. Device (1) according to Claims 2 and 9, wherein the interface (12) is located on an extension (14) of the lower support (11), said extension (14) extending towards the rail (7) without being under the electric charger (3).

11. Electric charger for an electric or hybrid motor vehicle, **characterized in that** it comprises an attachment device according to any one of Claims 1 to 10 for attaching the charger and the motor unit of the vehicle to rails of the vehicle.

12. Arrangement comprising a motor vehicle motor unit, rails, and a charger for charging the electric motor unit, **characterized in that** it comprises an attachment device according to any one of Claims 1 to 10 for attaching the charger and the motor unit of the vehicle to rails of the vehicle.
